# EUROPEAN PATENT SPECIFICATION

(11) **EP 1 591 486 B1**
(45) Date of publication and mention of the grant of the patent: **30.08.2006**
(21) Application number: 04708443.9
(22) Date of filing: 05.02.2004
(51) Int. Cl.: C08L 67/00, C08K 5/098, C08K 5/13, C08K 5/1515, C08K 5/29, C08K 5/36, C08L 79/00

(54) **THERMOPLASTIC POLYESTER RESIN COMPOSITION AND MOLDED ARTICLE**
THERMOPLASTISCHES POLYESTERHARZ ENTHALTENDE ZUSAMMENSETZUNG UND FORMKÖRPER
COMPOSITION DE RESINE POLYESTER THERMOPLASTIQUE ET ARTICLE MOULE

(30) Priority: 06.02.2003 JP 2003030146
(43) Date of publication of application: 02.11.2005
(73) Proprietor: DAICEL CHEMICAL INDUSTRIES, LTD., Sakai-shi, Osaka 590-0905 (JP)
(72) Inventor: YOSHIOKA, Shuji, Otake-shi, Hiroshima 739-0651 (JP)
(74) Representative: Grünecker, Kinkeldey, Stockmair & Schwanhäusser Anwaltssozietät
(86) International application number: PCT/JP2004/001183
(87) International publication number: WO 2004/069929

(56) References cited:
- EP-A- 0 763 567
- EP-A- 1 120 432
- JP-A- 6 172 507
- US-A- 4 500 686
- DATABASE WPI Section Ch, Week 199350 Derwent Publications Ltd., London, GB; Class A23, AN 1993-400496 XP002358503 -& JP 05 302022 A (TORAY IND INC) 16 November 1993 (1993-11-16)
- DATABASE WPI Section Ch, Week 199613 Derwent Publications Ltd., London, GB; Class A23, AN 1996-124206 XP002358504 & JP 08 020711 A (NIPPON SYNTHETIC CHEM IND CO) 23 January 1996 (1996-01-23)
- DATABASE WPI Section Ch, Week 197815 Derwent Publications Ltd., London, GB; Class A23, AN 1978-27410A XP002358505 -& JP 50 160362 A (TOYOBO KK) 25 December 1975 (1975-12-25)
- DATABASE WPI Section Ch, Week 200052 Derwent Publications Ltd., London, GB; Class A23, AN 2000-560740 XP002358506 -& JP 2000 191891 A (DU PONT TORAY CO LTD) 11 July 2000 (2000-07-11)

## Description

### TECHNICAL FIELD

The present invention relates to a molded article of an aromatic polyester block copolymer- series resin, which is excellent in hydrolysis resistance, heat resistance, and yellowing resistance, and to polyester based thermoplastic resin composition used thereof.

### BACKGROUND ART

A polyester block copolymer obtained from a block copolymerization of a lactone to an aromatic polyester has excellent rubber property, heat resistance, weathering resistance, and so on. However, the performances thereof to keep a stretch level at breakage when exposed to a high temperature for a long period of time (heat resistance durability) and to keep a stretch level at breakage when exposed to a high humidity for a long period of time (humidity resistance durability) are often insufficient, thus, if exposed to a high temperature or a high humidity for a long period of time, the stretch level at breakage, etc. may decrease considerably.

As methods to solve the above-mentioned problems with the polyester based thermoplastic resin, there have been disclosed such methods as following: a method in which a polycarbodiimide having a molecular weight of 500 or more is added (JP 50-160362 A (Claims, lower right column in p. 364, and Examples 1 and 2)); a method in which a mono- or polyfunctional epoxy compound is added (JP 58-162654 A (Claims, lower left column to lower right column in p. 364, and Examples 1 to 5)); a method in which a mono- or polyfunctional epoxy compound and a metal salt of an aliphatic carboxylic acid are added (JP 59-152947 A (Claims, the 3rd line from the bottom in p. 9 to the 4th line in p. 11, and Examples 1 and 2)); a method in which monofunctional and bifunctional or polyfunctional epoxy compounds and a trivalent phosphorous compound are added (JP 01-163259 A (Claims)). Nevertheless, all of the above techniques were insufficient in humidity-heat resistance durability for a long period of time.

JP 04-209649 A (Claims 1 to 4, paragraphs 0017, 0019 to 0024, and 0027 to 0029, and Examples 1 to 4) discloses a polyester based thermoplastic resin composition comprising 100 parts by weight of a polyester block copolymer obtained by reacting a polyethylene terephthalate and a lactone and additionally comprising (a) 0.05 to 5 parts by weight of a metal salt of an organic carboxylic acid, (b) 0.05 to 5 parts by weight of an epoxy compound including at least a tri- or polyfunctional epoxy compound, and (c) 0. 05 to 10 parts by weight of a polycarbodiimide. However, the disclosed composition is poor in flexibility, which gives rise to a problem of limitation on its use as an elastomer.

JP 05-302022 A (Claim 1, and paragraphs 0023, 0025, and 0028) discloses a polyester copolymer composition comprising a polyester block copolymer obtained by reacting a crystalline aromatic polyester and 5 to 80 parts by weight per the total copolymer of a lactone, 0.01 to 20 parts by weight of a mono- or polyfunctional epoxy compound, and 0.001 to 1 part by weight of a carbodiimide-denatured (or carbodiimide-modified) isocyanate compound. However, the use of both the carbodiimide-denatured isocyanate compound and the epoxy compound leads to increase in cross-linking points, so the composition is poor in flowability and processibility.

### DISCLOSURE OF THE INVENTION

An object of the present invention is to extremely improve hydrolysis resistance, heat resistance, and yellowing resistance of a molded article of an aromatic polyester block copolymer-series resin.

As a result of intensive investigation for improving hydrolysis resistance, the inventors of the present invention found that blending a polycarbodiimide compound and an epoxy compound with an aromatic polyester block copolymer having a low terminal carboxyl group content is effective to improve hydrolysis resistance, and further found that employing both a sulfur-series antioxidant and a phenol-series antioxidant with the polycarbodiimide compound and the epoxy compound additionally realizes excellent yellowing resistance and heat resistance, thus reaching the present invention.

The present invention is aimed to achieve an extreme improvement in heat resistance, yellowing resistance, and hydrolysis resistance, by using a polycarbodiimide compound, an epoxy compound, and other specific antioxidants in combination with an aromatic polyester block copolymer having a low terminal carboxyl group content. Thus, the means for achieving the object is a combination of specific compounds, which differs from the prior art.

Therefore, according to a first aspect of the present invention, there is provided a polyester based (or polyester-series) thermoplastic resin composition, comprising:
100 parts by weight of a polyester block copolymer (A) which is a reaction product of a thermoplastic aromatic polyester (a) and a lactone (b) and has a terminal carboxyl group in an amount of less than 5 mg-KOH/g as an acid number;
0.05 to 5 parts by weight of a polycarbodiimide compound (B);
0.05 to 5 parts by weight of a bifunctional or polyfunctional epoxy compound (C);
0.01 to 0.5 part by weight of a phenol-series (or phenol based) antioxidant (D); and
0.01 to 0.5 part by weight of a sulfur-series (or sulfur based) antioxidant (E).

According to a second aspect of the present invention, there is provided a polyester based thermoplastic resin composition according to the first aspect of the present invention, which further comprises 100 to 200 parts by weight of an aromatic polyester (F) relative to (or based on) 100 parts by weight of the polyester block copolymer (A).

According to a third aspect of the present invention, there is provided a polyester based thermoplastic resin composition according to the first or second aspect of the present invention, which further comprises 0.1 to 3 parts by weight of a metal salt of an organic carboxylic acid (or a metal organic carboxylate) (G) relative to (or based on) 100 parts by weight of the polyester block copolymer (A).

According to a fourth aspect of the present invention, there is provided a polyester based thermoplastic resin composition according to any one of the first to third aspects of the present invention, in which the thermoplastic aromatic polyester (a) is a polybutylene terephthalate.

According to a fifth aspect of the present invention, there is provided a polyester based thermoplastic resin composition according to any one of the first to fourth aspects of the present invention, in which a main raw material (or main material) of the polycarbodiimide compound (B) comprises at least one member selected from the group consisting of 4,4'-methylenebis(cyclohexylisocyanate), isophorone diisocyanate, and tetramethylxylylene diisocyanate.

According to a sixth aspect of the present invention, there is provided a polyester based thermoplastic resin composition according to any one of the first to fifth aspects of the present invention, characterized in that the bifunctional or polyfunctional epoxy compound (C) comprises at least a glycidyl ester.

According to a seventh aspect of the present invention, there is provided a polyester based thermoplastic resin composition according to any one of the first to sixth aspects of the present invention, characterized in that the weight ratio of the phenol-series antioxidant (D) relative to the sulfur-series antioxidant (E) [(D)/(E)] is 60/40 to 10/90.

According to an eighth aspect of the present invention, there is provided a molded article of an aromatic polyester block copolymer-series resin, which is formed from the polyester based thermoplastic resin composition recited in any one of the first to seventh aspect of the present invention.

### BEST MODE FOR CARRYING OUT THE INVENTION

### Polyester block copolymer (A)

The polyester block copolymer (A) (component (or ingredient) (A)) used in the present invention is obtained by a block copolymerization of a lactone (b) with a thermoplastic aromatic polyester (a).

### Thermoplastic aromatic polyester (a)

The thermoplastic aromatic polyester (a) in the present invention mainly comprises a polymer having an ester bond, which mainly has a hydroxyl group at a molecular terminal, and comprises a small amount of a polymer which has a carboxyl group at a molecular terminal. The thermoplastic aromatic polyester (a) includes a polyester having a melting point of 160°C or more, preferably 180 to 260°C when formed at a high polymerization level. In addition, the polyester used as a material for molding has the number average molecular weight (Mn) of preferably 5, 000 or more, more preferably 10,000 or more, by GPC measurement (standard PMMA conversion). The thermoplastic aromatic polyester (a) has an acid number of 0.5 to 7 mg-KOH/g, preferably 1.0 to 5 mg-KOH/g, more preferably 1.0 to 3.0 mg-KOH/g. If the acid number thereof is so much lower than the above range, the effect of adding the polycarbodiimide compound (B) and the epoxy compound (C) is weakened, while if the acid number thereof is so much higher than the above range, hydrolysis resistance is deteriorated.

The acid component (or ingredient) constituting the thermoplastic aromatic polyester (a) will be listed below.

The acid component constituting the thermoplastic aromatic polyester (a) includes mainly an aromatic dicarboxylic acid. The aromatic dicarboxylic acid includes, for example, terephthalic acid, isophthalic acid, 2,6-naphthalenedicarboxylic acid, biphenyldicarboxylic acid, etc. and esters thereof. The aromatic dicarboxylic acid is preferably terephthalic acid, and may be a mixture of terephthalic acid and a small amount of isophthalic acid, etc.

In addition, an aliphatic dicarboxylic acid having 2 to 40 carbon atoms is preferably a saturated aliphatic dicarboxylic acid, including, for example, succinic acid, glutaric acid, adipic acid, azelaic acid, sebacic acid, dodecanoic diacid, dimer acid, etc. and esters thereof.

Moreover, a cycloaliphatic (or alicyclic) dicarboxylic acid is preferably a saturated cycloaliphatic dicarboxylic acid, including, for example, 1,4-cyclohexanedicarboxylic acid, etc. and esters thereof.

The acid component constituting the thermoplastic aromatic polyester (a) mainly includes an aromatic dicarboxylic acid. The total content of the aliphatic dicarboxylic acid and the cycloaliphatic dicarboxylic acid is 0 to 40 mol%, preferably 0 to 20 mol% in the total dicarboxylic acid component.

Next, the glycol component (or ingredient) constituting the thermoplastic aromatic polyester (a) will be listed below.

An aliphatic diol is preferably a saturated aliphatic diol, including, for example, 1,4-butanediol, 1,3-butanediol, 1,2-butanediol, ethylene glycol, 1,2-propanediol, 1,3-propanediol, 1,5-pentanediol, 3-methyl-1,5-pentanediol, 1,9-nonanediol, 1,6-hexanediol, neopentyl glycol, polymethylene glycol, etc.

A cycloaliphatic diol is preferably a saturated cycloaliphatic diol, including, for example, 1,4-cyclohexanediol, 1,4-cyclohexanedimethanol, 2,2-bis(4-hydroxyethoxycyclohexyl)propane, an adduct of hydrogenated bisphenol A and an alkylene oxide such as ethylene oxide or propylene oxide, etc.

Examples of an aromatic diol include resorcinol, naphthalenediol, 2,2-bis(4-hydroxyphenyl)propane, and an adduct of bisphenol A and an alkylene oxide such as ethylene oxide or propylene oxide, including, for example, 2,2-bis(4-hydroxyethoxyphenyl)propane, 2,2-bis(4-hydroxydiethoxyphenyl)propane, 2,2-bis(4-hydroxytriethoxyphenyl)propane, 2,2-bis(4-hydroxypolyethoxyphenyl)propane, etc.

The diol component constituting the thermoplastic aromatic polyester (a) mainly includes an aliphatic diol. The total content of the cycloaliphatic diol and the aromatic diol in the total diol component is 0 to 40 mol%, preferably 0 to 20 mol%.

Of the above-exemplified components constituting the thermoplastic aromatic polyester, a butylene terephthalate unit is preferably included in 70 mol% or more, from the viewpoint of crystallinity, heat resistance, or costs for source materials.

### Lactone (b)

On the other hand, examples of the lactone include ε-caprolactone, methylated (ε-caprolactone) (e.g., 2-methyl, 4-methyl, and 4,4'-dimethyl), δ-valerolactone, methylated (δ-valerolactone), β-propiolactone. Of those, ε-caprolactone is the most preferable from the viewpoint of costs.

As a component (or ingredient) constituting the polyester block copolymer (A), the above lactone components may be used in combination of two or more thereof.

The copolymerization ratio of the thermoplastic aromatic polyester (a) relative to the lactone (b) [(a)/(b)] is 97/3 to 50/50, particularly preferably 90/10 to 55/45 in weight ratio. In addition, the thermoplastic aromatic polyester and the lactone may be reacted with each other by heating and mixing, optionally, with a catalyst.

In addition, in the polyester block copolymer (A) may be added a branched component such as the following polycarboxylic acid or polyol when the lactone (b) are block copolymerized with the aromatic polyester (a). Examples of the branched component include a polycarboxylic acid capable of forming a trifunctional or tetrafunctinal ester that is an aliphatic, cycloaliphatic, or aromatic compound such as tricarballylic acid (propanetricarboxylic acid), butanetetracarboxlylic acid, hydrogenated trimellitic acid, trimelissic acid, trimellitic acid, or pyromellitic acid; and/or a polyol capable of forming a trifunctional or tetrafunctinal ester such as glycerin, trimethylolpropane, or pentaerythritol. The amount of each branched component to be copolymerized may be 1. 0 mol% or less, preferably 0.5 mol% or less, more preferably 0.3 mol% or less.

The polyester block copolymer (A) may be used alone or as a mixture of two or more.

The polyester block copolymer (A) used in the present invention has a terminal carboxyl group content of 5 mg-KOH/g or less, preferably 3 mg-KOH/g or less. If the terminal carboxyl group content is over 5 mg-KOH/g, the extreme improvement in hydrolysis resistance, which is one of the major effects according to the present invention, will not be achieved.

The polyester block copolymer (A) has a bending modulus of 10 to 1,300 MPa, preferably 50 to 1,000 MPa, and more preferably 50 to 700 MPa.

The polyester block copolymer (A) used in the present invention preferably has a number average molecular weight of 5,000 or more, more preferably 10,000 or more, by GPC measurement (PMMA conversion). If the molecular weight is lower than the above range, it is difficult to use the copolymer as a molding material, and the meaning of applying the present invention is little.

### Polycarbodiimide compound (B)

The polycarbodiimide compound (B) (component (or ingredient) (B)) used in the present invention includes an aliphatic or cycloaliphatic-based polycarbodiimide compound having a carbodiimide group (-N=C=N-) in the molecule thereof. The polycarbodiimide compound is a compound having at least two carbodiimide bonds in the molecule. To achieve particularly excellent hydrolysis resistance, the polycarbodiimide compound preferably has an average degree of polymerization of 2 to 30. If the average degree of polymerization is less than 2, the problems such as bleed out are likely to occur, while if the average degree of polymerization is over 30, the problems such as dispersibility on kneading occur, thus such ranges are not preferable.

The polycarbodiimide compound is preferably a polycarbodiimide obtained by reaction of a diisocyanate compound such as an aromatic diisocyanate compound, an cycloaliphatic diisocyanate compound, or an aliphatic diisocyanate compound.

Examples of such diisocyanate compound include 1,3,5-isopropyl-2,4-diisocyanatebenzene, naphthalene--1,5-diisocyanate, 2,4-diisocyanato-3,5-diethyltoluene, 4,4'-methylenebis(2,6-diethylphenylisocyanate), 4,4'-methylenebis(2-ethyl-6-methylphenylisocyanate), 4,4'-methylenebis(2-isopropyl-6-methylphenylisocyanate), 4,4'-methylenebis(2,6-diisopropylphenylisocyanate), 4,4'-methylenebis(cyclohexylisocyanate), 4,4'-methylenebis(2-ethyl-6-methylcyclohexylisocyanate), isophorone diisocyanate, and tetramethylxylylene diisocyanate.

Those diisocyanate compounds may be used alone or in combination of two or more. Preferable are 4,4'-methylenebis(cyclohexylisocyanate), isophorone diisocyanate, and tetramethylxylylene diisocyanate. Particularly preferable polycarbodiimide compound is a polycarbodiimide compound obtained by reaction using any one or more of 4,4'-methylenebis(cyclohexylisocyanate), isophorone diisocyanate, or tetramethylxylylene diisocyanate as main raw materials.

The polycarbodiimide compound may have a terminal sealed with a primary amine, secondary amine, carboxylic acid, anhydride, or monoisocyanate. Examples of the monoisocyanate include n-butyl isocyanate, tert-butyl isocyanate, isobutyl isocyanate, ethyl isocyanate, n-propyl isocyanate, cyclohexyl isocyanate, and n-octadecyl isocyanate. Those may be used alone or in combination of two or more. Bifunctional or polyfunctional epoxy compound (C)

The bifunctional or polyfunctional epoxy compound (C) ((C) component (or ingredient)) used in the present invention may be used alone or as a mixture of two or more. At least one of the bifunctional or polyfunctional epoxy compound (C) comprises a glycidyl ester-based one, including diglycidyl phthalate, diglycidyl methyltetrahydrophthalate, diglycidyl terephthalate, di- or triglycidyl trimellitate, diglycidyl dimerate, etc. There may also be included a bifunctional or polyfunctional glycidyl ester in which the above-described polycarboxylic acid forms a cyclic structure, including, for example, diglycidyl cyclohexanedicarboxylate, etc.

The bifunctional or polyfunctional epoxy compound as an optional component, other than the above-described glycidyl ester-based compound as the essential component, is not particularly limited to a specific one, and preferably a cycloaliphatic epoxy-based compound from the viewpoint of heat discoloration resistance, etc. The cycloaliphatic epoxy-series compound includes CELLOXIDE 2021P, CELLOXIDE 2081, CELLOXIDE 2083, CELLOXIDE 2085, EPOLEAD GT300, and EPOLEAD GT400 (all trademarks) (all available from Daicel Chemical Industries, Ltd.).

The bifunctional or polyfunctional epoxy compound (C) has an epoxy number of 50 to 500 equivalent, preferably 100 to 300 equivalent/kg.

The amount of the above polycarbodiimide (B) to be added is 0.05 to 5 parts by weight, preferably 0.3 to 3 parts by weight, and more preferably 0.5 to 2 parts by weight per 100 parts by weight of the polyester block copolymer (A). If the amount of the polycarbodiimide (B) to be added is much lower than the above range, the hydrolysis resistance effect is weakened, while if much higher, the effect is little and the function as a polyester block copolymer is deteriorated.

The amount of the bifunctional or polyfunctional epoxy compound (C) to be added is 0.05 to 5 parts by weight per 100 parts by weight of the polyester block copolymer (A). If the amount of the epoxy compound (C) to be added is much lower than the above range, the synergistic effect with the polycarbodiimide compound (B) is poor, while if much higher, the stability in the melting (or fluxing) point and flowability is deteriorated.

The blending ratio (weight ratio) of the polycarbodiimide compound (B) relative to the epoxy compound (C) ((B)/(C)) is preferably 95/5 to 45/55. If the blending ratio is lower than or out of the above ratio, the effect on improving hydrolysis resistance is insufficient, while if much higher than the above range, the effect on improving hydrolysis resistance is poor and other performance deterioration, for example, stretching level deterioration is emphasized, which is not preferable.

### Phenol-series antioxidant (D)

The phenol-series antioxidant (D) (component (or ingredient) D) used in the present invention includes a hindered phenol compound.

Preferred examples of the phenol-series antioxidant (D) include 2,6-di-t-butyl-p-cresol, 2,2'-methylene-bis-(4-methyl-6-di-t-butylphenol), 4,4'-thiobis(3-methyl-t-butylphenol), 1,1,3-tris(2-methyl-4-hydroxy-5-t-butylphenyl)butane, pentaerythrityl-tetrakis[3-(3,5-di-t-butyl-4-hydroxyphenyl) propionate], octadecyl-3-(3,5-di-t-butyl-4-hydroxyphenyl)propionate, 3,9-bis{2-[3(3-t-butyl-4-hydroxy-5-methylphenyl)propio nyloxy]-1,1-dimethylethyl}-2,4,8,10-tetraoxaspiro[5,5] undecane. Particularly, preferable examples are 3,9-bis{2-[3(3-t-butyl-4-hydroxy-5-methylphenyl)propio nyloxy]-1,1-dimethylethyl}-2,4,8,10-tetraoxaspiro[5,5] undecane. Those phenol-series antioxidants may be used alone or in combination of two or more.

The blending amount of the phenol-series antioxidant is necessarily 0.01 to 0.5 part by weight, preferably 0.1 to 0.3 part by weight relative to 100 parts by weight of the polyester block copolymer composition. If the amount is less than 0.01 part by weight, improvement effect on heat resistance is poor, while if the amount is over 0.5 part by weight, further improvement effect on heat resistance will not be desired.

### Sulfur-series antioxidant (E)

Examples of the sulfur-series antioxidant (E) (component (or ingredient) (E)) used in the present invention include dilaulyl 3,3'-thio-dipropionate, dimyristyl 3,3'-thio-dipropionate, distearyl 3,3'-thio-dipropionate, and pentaerythritol tetrakis(3-laulyl thio-propionate). Of those, particularly preferable is pentaerythritol tetrakis(3-laulyl thio-propionate). The sulfur-series antioxidant (E) may be used alone or in combination of two or more.

The blending amount of the sulfur-series antioxidant (E) is necessarily 0.01 to 0.5 part by weight, preferably 0.1 to 0.3 part by weight relative to 100 parts by weight of the polyester block copolymer composition. If the amount is less than 0.01 part by weight, the improvement effect on heat resistance is poor, while if the amount is over 0.5 part by weight, the improvement effect on heat resistance will not be desired and the hydrolysis resistance is deteriorated on the contrary.

The phenol-series antioxidant (D) and the sulfur-series antioxidant (E) exhibit excellent yellowing resistance in combination, and are the essential components of the resin composition of the present invention. The blending ratio (weight ratio) of the phenol-series antioxidant (D) relative to the sulfur-series antioxidant (E) ((D)/(E)) is preferably 60/40 to 10/90, more preferably 50/50 to 20/80.

### Aromatic polyester (F)

In the present invention, an aromatic polyester (F) may optionally be added, for increasing shock resistant strength of the polyester block copolymer (A).

The aromatic polyester (F) used in the present invention includes a thermoplastic aromatic polyester, and particularly a polyester, which has an aromatic dicarboxylic acid as a major dicarboxylic acid component and also has an aliphatic diol having 2 to 10 carbon atoms as a major diol component. The polyester comprises preferably 80 mol% or more, more preferably 90 mol% or more of the aromatic dicarboxylic acid component in the total carboxylic acid component. On the other hand, the diol component includes preferably 80 mol% or more, more preferably 90 mol% or more of the aliphatic diol having 2 to 10 carbon atoms in the total diol component.

The dicarboxylic acid component includes the compounds exemplified for the above-described thermoplastic aromatic polyester (a).

Examples of the aliphatic diol having 2 to 10 carbon atoms include an aliphatic diol such as ethylene glycol, trimethylene glycol, tetramethylene glycol, hexamethylene glycol, or neopentyl glycol; and a cycloaliphatic diol such as 1,4-cyclohexanedimethanol. The aliphatic diol and cycloaliphatic diol may be used alone or in combination of two or more. Examples of a glycol other than the aliphatic diol having 2 to 10 carbon atoms include p,p'-dihydroxyethoxy bisphenol A and polyoxyethylene glycol.

The thermoplastic aromatic polyester preferably includes a polyester having ethylene terephthalate, trimethylene terephthalate, tetramethylene terephthalate, ethylene-2,6-naphthalene dicarboxylate, or tetramethylene-2,6-naphthalene dicarboxylate as a main repeat unit. The main repeat unit refers to a unit existing at least 80 mol% in all repeat units. More preferable thermoplastic aromatic polyester is preferably a polyester having ethylene terephthalate, or trimethylene terephthalate, tetramethylene terephthalate as a main repeat unit. Of those, a polyester having tetramethylene terephthalate as a main repeat unit is the most preferable.

The thermoplastic aromatic polyester (F) used in the present invention has a terminal carboxyl group content of 5 mg-KOH/g or less, preferably 3 mg-KOH/g or less, more preferably 1 mg-KOH/g or less.

The thermoplastic aromatic polyester (F) used in the present invention may be the above thermoplastic aromatic polyester (a) having the above terminal carboxyl group content.

### Metal salt of organic carboxylic acid (G)

The metal salt of an organic carboxylic acid (G) used in the present invention is added as a crystal nucleus agent. Specific examples thereof include metal salts of stearic acid, sebacic acid, palmitic acid, montanic acid, dimer acid, trimer acid, and benzoic acid. Metal salts of an aliphatic carboxylic acid are preferable. Examples of the metal include sodium, potassium, and calcium. Sodium montanate is particularly preferable. These metal salts of organic carboxylic acids may be used alone or in combination of two or more.

The amount of the metal salt (G) to be added is 0.05 to 5 parts by weight, preferably 0.1 to 3 parts by weight relative to 100 parts by weight of the polyester block copolymer (A). If the amount of the metal salt (G) to be added is lower than the above range, the crystallization is insufficient and insufficiently promoted, thereby deteriorating the moldability. While, if over the above range, the stretch level at breakage decreases and hydrolysis resistance is poor.

The thermoplastic resin composition of the present invention may be further blended with various stabilizers other than the above described, a phosphorous-series (or phosphorous based) antioxidant, a light stabilizer, and a heavy metal deactivator, and further with a reinforcement such as glass fiber, an inorganic filler, an organic pigment, carbon black, aflame-retardant, a f lame-retardant adjuvant, a nucleator (or a nucleating agent) other than the above described, a lubricant, etc.

The polyester based thermoplastic resin composition of the present invention may be used as molding materials for injection molded articles, extrusion molding articles, blow molding articles, etc. and films, etc. , that are excellent in hydrolysis resistance, heat resistance, and yellowing resistance.

The method for mixing the above polyester based thermoplastic resin composition to react the terminal carboxyl group of the polyester block copolymer (A) with the polycarbodiimide compound (B) or the bifunctional or polyfunctional epoxy compound (C) is not particularly limited provided that it is a method for mixing and heating the composition to melt in uniform, and is preferably a method using an extruder, etc. The reaction temperature is, for example, an extrusion temperature of 200 to 280°C, preferably 220 to 270°C. The reaction time is, for example, a retention time of 0.5 to 5 minutes, preferably 1 to 3 minutes.

### EXAMPLES

The present invention will now be explained in more detail, however, the present invention is not limited thereto. Note that "part" in the examples refers "part by weight".

Analytical values were determined in the following methods.

Number average molecular weight (Mn): The values were obtained by GPC measurement and the standard PMMA conversion. The GPC measurement was carried out using columns: Shodex GPC HFIP-800P, HFIP-805P, HFIP-804P and HFIP-803P (all available from Showa Denko K.K.) and a detector: RID-6A (available from Shimadzu Corporation) at a column temperature of 50°C using an eluent of hexafluoroisopropanol at a flow rate of 1.0 ml/min.

Terminal carboxyl group content (referred as [COOH] in Table 1): A sample was dried under reduced pressure at 100°C for 20 hours, and then weighed out 1.0 g. The dried sample was dissolved in 50 g of benzyl alcohol at 160°C with heating. After water-cooling, 50 g of chloroform was added to the solution, followed by mixing. Subsequently, titration using phenolphthalein as an indicator was carried out using a 1/10N KOH-ethanol solution. Three appropriate time points from 10 to 30 minutes were taken as a time for dissolution, and the value at 0 minute was extrapolated. Then by subtracting the separately determined acid number for a mixed solution of benzyl alcohol and chloroform from the value at 0 minute, the value as an acid number was obtained (unit: mg-KOH/g).

Hue: The yellow index (YI) value was obtained using a color difference meter: Σ-90 (available from Nippon Denshoku Industries Co., Ltd.).

First, production examples of the polyester block copolymer (A) will be explained.

### [Production Example 1]

As the thermoplastic aromatic polyester (a), polybutylene phthalate consisting of a butylene phthalate unit in 100% (commercially available product, melting point: 225°C, acid number: 4.0 mg-KOH/g) was used.

As the lactone (b), commercially available ε-caprolactone distilled under reduced pressure (acid number: 0.1 mg-KOH/g) was used.

Into a reaction vessel equipped with a stirrer, a thermometer, a capacitor and a line for reservoir and outlet, 60 parts of the above polybutylene phthalate and 40 parts of ε-caprolactone were introduced and mixed at 235°C for 1 hour to carry out the reaction. With keeping the temperature, the pressure was then reduced from ambient pressure to 1 torr or less over 1 hour, and kept the reduced pressure for 1 hour to remove the residual ε-caprolactone. The obtained polyester block copolymer (I) (abbreviated name: PBT-PCL(I)) had an acid number of 7.0 mg-KOH/g, a molecular weight of 36,000, and a melting point of 205°C.

### [Production Example 2]

Manufacture was carried out in a similar manner as in Production Example 1 except that, as the thermoplastic aromatic polyester (a), polybutylene phthalate which consisted of a butylene phthalate unit in 100% (commercially available product, melting point: 225°C, acid number: 2.0 mg(KOH)/g) dried at 1 torr for 1 hour at 150°C (moisture content: 100 ppm) was used. The obtained polyester block copolymer (II) (abbreviated name: PBT-PCL(II)) had an acid number of 1. 9 mg-KOH/g, a molecular weight of 37,000, and a melting point of 205°C.

### [Production Example 3]

Manufacture was carried out in a similar manner as in Production Example 1 except that, as the thermoplastic aromatic polyester (a), polybutylene phthalate which consisted of a butylene phthalate unit in 100% (commercially available product, melting point: 225°C, acid number: 0.7 mg-KOH/g) dried at 1 torr for 1 hour at 150°C (moisture content: 100 ppm) and, as the lactone (b), commercially available ε-caprolactone distilled under reduced pressure (acid number: 0.1 mg-KOH/g, moisture content: 70 ppm) were used. The obtained polyester block copolymer (III) (abbreviated name: PBT-PCL(III)) had an acid number of 0.5 mg-KOH/g, a molecular weight of 38,000, and a melting point of 203°C.

Polyester based thermoplastic resin compositions were manufactured using the various polyester block copolymers (A) manufactured as described above, and test pieces below were molded from the obtained polyester based thermoplastic resin compositions to determine physical properties thereof.

The shape of the test piece for stretch properties followed JIS (Japanese Industrial Standards) 2nd specimen.

Stretch properties (stretch strength and stretch level at breakage): The stretch properties were evaluated in accordance with JIS K7133.

Hydrolysis resistance test: After the test piece was immersed in a hot water of 95°C for 240 hours, the stretch strength and the stretch level at breakage were measured for the test piece taken out of water.

Heat resistance test: After the test piece was heat-treated at 170°C for 500 hours, the stretch strength and the stretch level at breakage were measured.

The yellowing resistance was evaluated by measuring hue changes in a pellet for molding which was heat-treated at 160°C for 240 hours with the use of a color difference meter: Σ-90 (available from Nippon Denshoku Industries Co. , Ltd.) to determine a yellow index (YI) value.

### [Examples 1 and 2, Comparative Examples 1 to 5] Used components

Polyester block copolymer (A): The above obtained polyester block copolymer (I), (II), or (III) dried at 120°C for 5 hours.
Polycarbodiimide compound (B): poly(4,4'-methylenebiscyclohexylcarbodiimide) (trade name: Carbodilite HMV-8CA, Nisshinbo Industries, Inc.),
Bifunctional epoxy compound (C): cyclohexane diglycidyl ester(trade name:Epomik R540,Mitsui Chemicals, Inc.),
Phenol-series antioxidant (D): 3,9-bis{2-[3(3-t-butyl-4-hydroxy-5-methylphenyl)propio nyloxy]-1,1-dimethylethyl}-2,4,8,10-tetraoxaspiro[5,5] undecane, and
Sulfur-series antioxidant (E): pentaerythritol tetrakis(3-laurylthio-propionate).

The components (A) to (E) were mixed uniformly in variable ratios shown in Table 1 (unit: part by weight) by a V-shape blender. The obtainedmixture was melt-kneaded at a barrel temperature of 250°C by a biaxial extruder having a diameter of 20 mm, and the kneaded matter was extruded from the die to give a thread, and the thread was cooled and cut to obtain a pellet for molding.

Next, after the pellet was dried with a hot air at 120°C for 5 hours, the pellet was molded using an injection molding apparatus having a clumping force of 80 ton-f and being equipped with a mold for a physical test, under a molding condition of a cylinder temperature of 240°C, a die temperature of 40°C, injection pressure of 600 kg/cm², cooling time of 30 seconds, and total time for one cycle of 60 seconds.

The results of various tests for the above test pieces are shown in Table 1.

**Table 1**

| | | | | Examples | | Comparative Examples | | | | |
|---|---|---|---|---|---|---|---|---|---|---|
| | | | | 1 | 2 | 1 | 2 | 3 | 4 | 5 |
| Formulation | PBT-PCL(I) | [COOH]7.0mg-KOH/g | | | | 100 | | | | |
| | PBT-PCL(II) | [COOH]1.9mg-KOH/g | | | 100 | | 100 | 100 | | 100 |
| | PBT-PCL(III) | [COOH]0.5mg-KOH/g | | 100 | | | | | 100 | |
| | Component B | Polycarbodiimide | | 1 | 3 | 5 | 0 | 2 | 0 | 7 |
| | Component C | Epoxy compound | | 0.3 | 0.3 | 0.3 | 2 | 0 | 0 | 2 |
| | Component D | Phenol-series antioxidant | | 0.2 | 0.2 | 0.2 | 0.2 | 0.2 | 0.2 | 0.2 |
| | Component E | Sulfur-series antioxidant | | 0.3 | 0.3 | 0.3 | 0.3 | 0.3 | 0.3 | 0.3 |
| Test piece | Before test | Molecular weight | | 39000 | 39000 | 41000 | 38000 | 39000 | 38000 | 40000 |
| | | [COOH] | (mg-KOH/g) | 0 | 0 | 0 | 0 | 0 | 0.5 | 0 |
| | | Stretch strength Stretch level at breakage | (MPa) (%) | 24 400 | 24 390 | 24 380 | 23 400 | 25 380 | 24 410 | 26 250 |
| | | YI value | (-) | 25 | 26 | 28 | 23 | 27 | 24 | 30 |
| | After hydrolysis resistance test | Molecular weight | | 25000 | 24000 | 13000 | 12000 | 15000 | 1500 | 2000 |
| | | [COOH] | (mg-KOH/g) | 1 | 1.5 | 5 | 5 | 6 | 6 | 1 |
| | | Stretch strength | (MPa) | 23 | 22 | 17 | 20 | 20 | 15 | 20 |
| | | Stretch level at breakage | (%) | 280 | 270 | 100 | 100 | 70 | 130 | 150 |
| | After heat resistance test | Stretch strength | (MPa) | 25 | 25 | 25 | 25 | 25 | 26 | 27 |
| | | Stretch level at breakage | (%) | 390 | 380 | 390 | 390 | 370 | 400 | 200 |
| | | YI value | (-) | 35 | 36 | 57 | 34 | 39 | 35 | 57 |

As shown in Table 1, it is found that when the terminal carboxyl group content of the polyester block copolymer is high, even if both of the polycarbodiimide and the epoxy compound are used in combination, the hydrolysis resistance is not improved outstandingly and the YI value is high so that yellowing advances (see Comparative Example 1).

When an excess of the polycarbodiimide and/or the epoxy compound is incorporated, the molecular weight of the composition tends to be higher. But flexibility of the composition is lost, water resistance thereof is not improved so much, and a deterioration in heat resistance and an increase in the YI value are remarkably conspicuous (see Comparative Example 5).

Furthermore, in a system in that the polyester block copolymer having a low terminal carboxyl group content are not blended with the essential polycarbodiimide and/or the epoxy compound, the improvement effect on hydrolysis resistance is little even if the phenol-series antioxidant and the sulfur-series antioxidant are blended (see Comparative Examples 2 to 4).

On the other hand, it is found that the composition using the polybutylene terephthalate having a low terminal carboxyl group content essential to the present invention and comprising the polycarbodiimide compound, the phenol-series antioxidant, and the sulfur-series antioxidant outstandingly improves in hydrolysis resistance and heat resistance (see Examples 1 and 2).

### [Examples 3 and 4 and Comparative Examples 6 to 10]

The polyester copolymer compositions were synthesized in a similar manner as in the above examples, and tests for hydrolysis resistance and heat resistance were carried out on the compositions consisted in the blending ratio shown in Table 2. The results are shown in Table 2.

**Table 2**

| | | | | Examples | | Comparative Examples | | | | |
|---|---|---|---|---|---|---|---|---|---|---|
| | | | | 3 | 4 | 6 | 7 | 8 | 9 | 10 |
| Formulation | PBT-PCL(II) | [COOH]1.9mg-KOH/g | | | 100 | 100 | 100 | | | 100 |
| | PBT-PCL(III) | [COOH]0.5mg-KOH/g | | 100 | | | | 100 | 100 | |
| | Component B | Polycarbodiimide | | 1 | 2 | 2 | 2 | 1 | 1 | 2 |
| | Component C | Epoxy compound | | 0.3 | 0.5 | 0.5 | 0.5 | 0.3 | 0.3 | 0.3 |
| | Component D | Phenol-series antioxidant | | 0.1 | 0.2 | 0.2 | 0 | 0 | 0 | 0.2 |
| | Component E | Sulfur-series antioxidant | | 0.3 | 0.6 | 0 | 0.3 | 0 | 0.3 | 0 |
| Test piece | Before test | Molecular weight | | 38000 | 37000 | 38000 | 37000 | 38000 | 37000 | 37000 |
| | | [COOH] | (mg-KOH/g) | 0 | 0.1 | 0.1 | 0.1 | 0 | 0 | 0.1 |
| | | Stretch strength Stretch level at breakage | (MPa) (%) | 24 400 | 25 380 | 25 380 | 25 380 | 24 400 | 24 400 | 25 380 |
| | | YI value | (-) | 25 | 25 | 27 | 28 | 28 | 26 | 27 |
| | After hydrolysis resistance test | Molecular weight | | 25000 | 24000 | 25000 | 25000 | 25000 | 24000 | 24000 |
| | | [COOH] Stretch strength Stretch level at breakage | (mg-KOH/g) (MPa) (%) | 1 23 270 | 1 22 250 | 1 21 250 | 1 21 250 | 1 23 270 | 1 22 250 | 1 23 260 |
| | After heat resistance test | Stretch strength Stretch level at breakage YI value | (MPa) (%) (-) | 25 390 34 | 26 390 37 | 27 200 59 | 25 200 58 | 26 200 58 | 24 150 60 | 21 290 60 |

The composition of the present invention shows remarkably improved values for both hydrolysis resistance and heat resistance (Example 3 and 4). While, the compositions lacking in a part of the constitution of the present invention show low improvement effects on hydrolysis resistance and heat resistance. In particular, after the heat treatment or the hydrolysis test, the stretch level at breakage thereof is low and the YI value is outstandingly increased (Comparative Examples 6 to 10).

It is found that, to improve both hydrolysis resistance and heat resistance, using the polycarbodiimide compound, the phenol-series antioxidant, and the sulfur-series antioxidant in combination is essential and blending appropriate amount of those components realizes the effect. It is further found that, if the blending amount of the polycarbodiimide compound is too much, the molecular weight increases, but the stretch level at breakage decreases and hydrolysis resistance and heat resistance deteriorate.

The thermoplastic resin composition of the present invention is excellent in both hydrolysis resistance and heat resistance, and thus preferably used as an industrial resin. Especially, because the present composition is excellent in heat resistance and unlikely to cause hue changes, the composition may be preferably used as an extremely improved resin in hydrolysis resistance under conditions of high temperature or/and high humidity in the resin molded product subjected to color matching.

### INDUSTRIAL APPLICABILITY

The polyester based thermoplastic resin composition of the present invention may be used as molding materials such as injection molded articles, extrusion molded articles, blow molded articles, film, etc. Because the composition is excellent in hydrolysis resistance, heat resistance, and yellowing resistance and unlikely to cause hue changes, it can be preferable used as an industrial resin composition or/and a molded article made thereof which requires especially under conditions of high temperature or/and high humidity.

## Claims

1. A polyester based thermoplastic resin composition comprising:
100 parts by weight of a polyester block copolymer (A) which is a reaction product of a thermoplastic aromatic polyester (a) and a lactone (b) and has a terminal carboxyl group content of less than 5 mg-KOH/g as an acid number;
0.05 to 5 parts by weight of a polycarbodiimide compound (B);
0.05 to 5 parts by weight of a bifunctional or polyfunctional epoxy compound (C);
0.01 to 0.5 part by weight of a phenol-series antioxidant (D); and
0.01 to 0.5 part by weight of a sulfur-series antioxidant (E).

2. A polyester based thermoplastic resin composition according to Claim 1, which further comprises 100 to 200 parts by weight of an aromatic polyester (F) relative to 100 parts by weight of the polyester block copolymer (A).

3. A polyester based thermoplastic resin composition according to Claim 1 or 2, which further comprises 0.1 to 3 parts by weight of a metal salt of an organic carboxylic acid (G) relative to 100 parts by weight of the polyester block copolymer (A).

4. A polyester based thermoplastic resin composition according to any one of Claims 1 to 3, wherein the thermoplastic aromatic polyester (a) is a polybutylene terephthalate.

5. A polyester based thermoplastic resin composition according to any one of Claims 1 to 4, wherein a main raw material of the polycarbodiimide compound (B) comprises at least one member selected from the group consisting of 4,4'-methylenebis(cyclohexylisocyanate), isophorone diisocyanate, and tetramethylxylylene diisocyanate.

6. A polyester based thermoplastic resin composition according to any one of Claims 1 to 5, wherein the bifunctional or polyfunctional epoxy compound (C) comprises at least a glycidyl ester.

7. A polyester based thermoplastic resin composition according to any one of Claims 1 to 6, wherein the weight ratio of the phenol-series antioxidant (D) relative to the sulfur-series antioxidant (E) [(D)/(E)] is 60/40 to 10/90.

8. A molded article of an aromatic polyester block copolymer-series resin, which is formed from the polyester based thermoplastic resin composition recited in any one of Claims 1 to 7.

## Patentansprüche

1. Thermoplastische Harzzusammensetzung auf Polyesterbasis, umfassend:
100 Gewichtsteile eines Polyesterblockcopolymers (A), erhalten bei der Umsetzung eines thermoplastischen aromatischen Polyesters (a) mit einem Lacton (b), mit einem Gehalt an endständigen Carboxygruppen von weniger als 5 mg KOH/g, angegeben als Säurezahl;
0,05 bis 5 Gewichtsteile einer Polycarbodiimidverbindung (B);
0,05 bis 5 Gewichtsteile einer bifunktionellen oder polyfunktionellen Epoxyverbindung (C);
0,01 bis 0,5 Gewichtsteile eines Antioxidationsmittels vom Phenol-Typ (D); und
0,01 bis 0,5 Gewichtsteile eines Antioxidationsmittels vom Schwefel-Typ (E).

2. Thermoplastische Harzzusammensetzung auf Polyesterbasis nach Anspruch 1, weiterhin umfassend 100 bis 200 Gewichtsteile eines aromatischen Polyesters (F), bezogen auf 100 Gewichtsteile des Polyesterblockcopolymers (A).

3. Thermoplastische Harzzusammensetzung auf Polyesterbasis nach Anspruch 1 oder 2, weiterhin umfassend 0,1 bis 3 Gewichtsteile eines Metallsalzes einer organischen Carbonsäure (G), bezogen auf 100 Gewichtsteile des Polyesterblockcopolymers (A).

4. Thermoplastische Harzzusammensetzung auf Polyesterbasis nach einem der Ansprüche 1 bis 3, wobei der thermoplastische aromatische Polyester (a) ein Polybutylenterephthalat ist.

5. Thermoplastische Harzzusammensetzung auf Polyesterbasis nach einem der Ansprüche 1 bis 4, wobei ein Ausgangsmaterial für die Herstellung der Polycarbodiimidverbindung (B) mindestens einen Bestandteil umfasst, ausgewählt aus der Gruppe, bestehend aus 4,4'-Methylenbis(cyclohexylisocyanat), Isophorondiisocyanat und Tetramethylxylylendiisocyanat.

6. Thermoplastische Harzzusammensetzung auf Polyesterbasis nach einem der Ansprüche 1 bis 5, wobei die bifunktionelle oder polyfunktionelle Epoxyverbindung (C) mindestens einen Glycidylester umfasst.

7. Thermoplastische Harzzusammensetzung auf Polyesterbasis nach einem der Ansprüche 1 bis 6, wobei das Gewichtsverhältnis von Antioxidationsmittel vom Phenol-Typ (D) zu Antioxidationsmittel vom Schwefel-Typ (E), [(D)/(E)], im Bereich von 60/40 bis 10/90 liegt.

8. Formkörper aus einem Harz aus einem aromatischen Blockcopolymer auf Polyesterbasis, hergestellt aus der thermoplastischen Harzzusammensetzung auf Polyesterbasis nach einem der Ansprüche 1 bis 7.

## Revendications

1. Composition de résine thermoplastique à base de polyester comprenant :
100 parties en poids d'un copolymère séquencé polyester (A) qui est un produit de réaction d'un polyester aromatique thermoplastique (a) et d'une lactone (b) et qui a une teneur en groupes carboxyle terminaux inférieure à 5 mg-KOH/g en tant qu'indice d'acide ;
0,05 à 5 parties en poids d'un composé polycarbodümide (B) ;
0,05 à 5 parties en poids d'un composé époxy bifonctionnel ou polyfonctionnel (C) ;
0,01 à 0,5 partie en poids d'un antioxydant de la série du phénol (D) ; et
0,01 à 0,5 partie en poids d'un antioxydant de la série du soufre (E).

2. Composition de résine thermoplastique à base de polyester selon la revendication 1, qui comprend en outre de 100 à 200 parties en poids d'un polyester aromatique (F), pour 100 parties en poids du copolymère séquencé de polyester (A).

3. Composition de résine thermoplastique à base de polyester selon la revendication 1 ou 2, qui comprend en outre de 0,1 à 3 parties en poids d'un sel métallique d'un acide carboxylique organique (G), pour 100 parties en poids du copolymère séquencé de polyester (A).

4. Composition de résine thermoplastique à base de polyester selon l'une quelconque des revendications 1 à 3, dans laquelle le polyester aromatique thermoplastique (a) est un poly(téréphtalate de butylène).

5. Composition de résine thermoplastique à base de polyester selon l'une quelconque des revendications 1 à 4, dans laquelle une matière première principale du composé polycarbodümide (B) comprend au moins un élément choisi dans le groupe consistant en le 4,4'-méthylènebis(cyclohexylisocyanate), l'isophorone diisocyanate et le tétraméthylxylylène diisocyanate.

6. Composition de résine thermoplastique à base de polyester selon l'une quelconque des revendications 1 à 5, dans laquelle le composé époxy bifonctionnel ou polyfonctionnel (C) comprend au moins un glycidylester.

7. Composition de résine thermoplastique à base de polyester selon l'une quelconque des revendications 1 à 6, dans laquelle le rapport en poids de l'antioxydant de la série du phénol (D) à l'antioxydant de la série du soufre (E) [(D)/(E)] est de 60/40 à 10/90.

8. Article moulé d'une résine de la série d'un copolymère séquencé de polyester aromatique, qui est formé à partir de la composition de résine thermoplastique à base d'un polyester selon l'une quelconque des revendications 1 à 7.
